# EUROPÄISCHE PATENTSCHRIFT

(11) **EP 0 871 684 B1**
(45) Veröffentlichungstag und Bekanntmachung des Hinweises auf die Patenterteilung: **10.05.2000**
(21) Anmeldenummer: 96944075.9
(22) Anmeldetag: 30.12.1996
(51) Int. Cl.: C09D 167/06, C08G 63/553

(54) **EMISSIONSARME BINDEMITTEL FÜR ÜBERZÜGE**
LOW-EMISSION BINDERS FOR COATINGS
LIANTS A FAIBLE TAUX D'EMISSION POUR REVETEMENTS

(30) Priorität: 04.01.1996 DE 19600152
(43) Veröffentlichungstag der Anmeldung: 21.10.1998
(73) Patentinhaber: BASF AKTIENGESELLSCHAFT, 67056 Ludwigshafen (DE)
(72) Erfinder: BLUM, Rainer, D-67069 Ludwigshafen (DE); LOERZER, Thomas, D-76829 Landau (DE)
(74) Vertreter: Isenbruck, Günter, Dr.
(86) Internationale Anmeldenummer: EP9605861
(87) Internationale Veröffentlichungsnummer: WO9725387

(56) Entgegenhaltungen:
- EP-A- 0 186 165
- EP-A- 0 275 034
- US-A- 4 801 629

## Beschreibung

Die Erfindung betrifft die Verwendung spezieller Polyesterharze als lösemittel- und monomerenfreie Bindemittel für Überzüge. Sie sind geeignet zur Herstellung von pigmentierten und unpigmentierten Lacken und sonstigen Beschichtungen für Metalle und Nichtmetalle. Ihre Härtung, d.h. der Übergang vom flüssigen in den festen Gebrauchszustand, erfolgt nach einem Mechanismus, der emissionsfrei ist.

Ungesättigte Polyesterharze mit Struktureinheiten des Dihydrodicyclopentadiens (=DCPD) als Bestandteil üblicher UP-Harz-Systeme, d.h. gelöst in monomeren Reaktivverdünnern, in der Regel gelöst in Styrol, sind Gegenstand zahlreicher Veröffentlichungen. Flüssig, gegebenenfalls nach Erwärmung verarbeitbare und bei Verarbeitungstemperatur lagerstabile Massen, deren Viskosität über die erfindungsgemäßen "DCPD-polyfunktionellen Verbindungen" eingestellt wird, ohne übliche acrylisch oder vinylisch ungesättigte Monomerreaktivverdünner, sind jedoch bisher nicht bekannt.

In der DE-A-27 08 846 wird auf die Möglichkeit der Verringerung von Styrol in üblichen UP-Harz-Systemen durch die Mitverwendung spezieller DCPD-haltiger Polyester hingewiesen.

Die DE-A-31 07 450 betrifft ungesättigte Polyester mit Oligomeren des Cyclopentadiens als Endgruppen, die als Lösungen in ethylenisch ungesättigten Monomeren zur Herstellung von Formkörpern und Überzügen Verwendung finden können.

In der EP-A- 0 684 284 werden synergistische Mischungen aus ungesättigten Polyetheresterharzen und Dicyclopentadienpolyesterharzen beschrieben, die in Styrol gelöst und in Gegenwart von peroxidischen Katalysatoren gehärtet werden.

Die EP-A-0 101 585 bezieht sich auf ungesättigte Polyesterharze, die durch Addition von Cyclopentadien an die Doppelbindung des Polyesters modifiziert und dann in Vinylmonomeren aufgelöst werden. Bei Raumtemperatur oder nach Erwärmen flüssig verarbeitbare Stoffe unter Mitverwendung der erfindungsgemäßen "DCPD-polyfunktionellen Verbindungen", ohne Mitverwendung acrylisch oder vinylisch ungesättigter monomerer Reaktivverdünner, als emissionsarme Bindemittel, für eine kombinierte Härtung durch UV-Licht und Wärme, werden jedoch in keiner dieser Druckschriften offenbart.

Zur Herstellung emissionsarmer Beschichtungsmittel für Metalle und andere Substrate sind Pulverlacke, wäßrige Lacksysteme und flüssige, (UV-)strahlenhärtbare Lacke bekannt. Nachteile, u.a. bei wäßrigen Systemen, sind die Notwendigkeit, das Wasser zu verdampfen und der Einfluß des Wassers auf die Substrate. Ein bekanntes Problem bei Pulverlacken ist die Diskrepanz zwischen der Forderung nach guter Lagerstabilität der Pulver (Blockfestigkeit) und gutem Verlauf beim Aufschmelzen. Flüssige (UV-)strahlenhärtbare Lacke sind Systeme, bei denen die gesamte Lackmasse in der Lackierung verbleibt (100%-Systeme), sie haben guten Verlauf und gute Eigenschaften der Lackierungen. Nachteile sind die Oberflächeninhibierung der Vernetzungsreaktion durch Luftsauerstoff und der hohe Härtungsschrumpf, der in der Regel eine schlechte Haftung bewirkt. Weitere Nachteile bekannter UV-Systeme betreffen das häufig gesundheitsschädliche Potential der mitverwendeten, olefinisch ungesättigten organischen Verbindungen (Reaktivverdünner), wie Styrol, Vinyltoluol, Allylphthalat und der monomeren oder oligomeren Acryl- oder Vinylester, sowohl bei der Verarbeitung als auch bei den fertigen Beschichtungen, in denen Restmonomere verbleiben.

Aufgabe der vorliegenden Erfindung ist es, die oben angeführten Nachteile zu vermeiden.

Die vorliegende Erfindung löst diese Probleme dadurch, daß sie bei Raumtemperatur oder nach mäßigem Erwärmen ohne Lösemittelzugabe flüssig verarbeitbare, gesättigte oder auch ungesättigte Polyester verwendet, die Struktureinheiten laut Formeln (I) und/oder (II) aufweisen und den weiter unten definierten Bedingungen bezüglich der Schmelz- und Viskositätsbereiche entsprechen. Diese Bereiche sind erfindungsgemäß überraschenderweise durch die Mitverwendung der "Poly-DCPD-Verbindungen", ohne Mitverwendung von vinylisch ungesättigten, monomeren Reaktivverdünnern, einstellbar.

Die Härtbarkeit von gesättigten Polyestern mit Struktureinheiten der Formeln (I) und (II) mit radikalliefernden Stoffen thermisch oder mit Strahlen, bevorzugt UV-Strahlen, oder besonders bevorzugt mit einer kombinierten Härtung mit Strahlen und Wärme war bisher nicht bekannt.

Gegenstand der vorliegenden Erfindung ist die Verwendung von monomerenfreien, gesättigten und ungesättigten Polyesterharzen oder Mischungen aus gesättigten und ungesättigten Polyesterharzen, die Struktureinheiten der allgemeinen Formeln (I) und/oder (II) aufweisen, 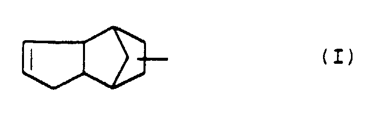 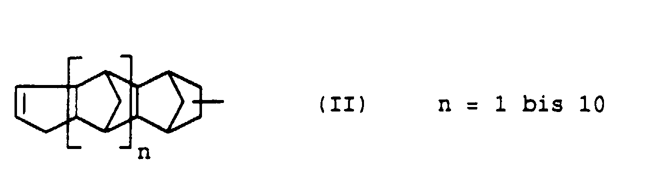 als emissionsarme Bindemittel für Überzüge.

Die Struktureinheiten der Formeln (I) und/oder (II) können in Form von Estern des Dihydrodicyclopentadienols mit monomeren oder polymeren Carbonsäuren enthaltend Gruppierungen der Formel (III) und/oder in Form von Estern des Oligodihydrodicyclopentadienols mit monomeren oder polymeren Carbonsäuren enthaltend Gruppierungen der Formel (IV) 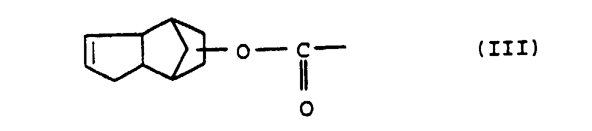 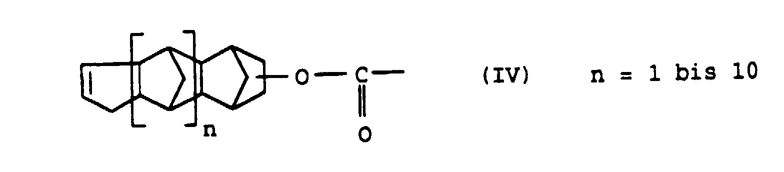 eingebaut sein.

Die Bindemittel können monomerenfreie, ungesättigte Polyesterharze sein, die Struktureinheiten der allgemeinen Formeln (I) und/oder (II) aufweisen, oder es können zusätzlich ungesättigte Polyester mit Struktureinheiten der Formeln (I) und/oder (II) mitverwendet werden, wenn gesättigte Polyesterharze eingesetzt werden.

Die Struktureinheiten der Formeln (I) und/oder (II) können insbesondere durch Mitverwendung von Verbindungen der Formeln (V) und (VI), das sind die Dihydrodicyclopentadienolhalbester der Maleinsäure und Fumarsäure und die Halbester der Maleinsäure und Fumarsäure mit oligomerem Dihydrodicyclopentadienol, 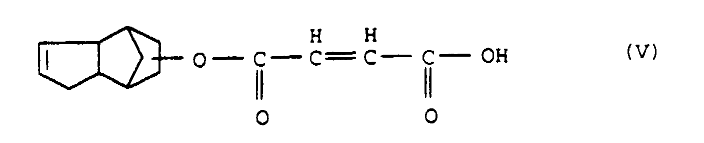 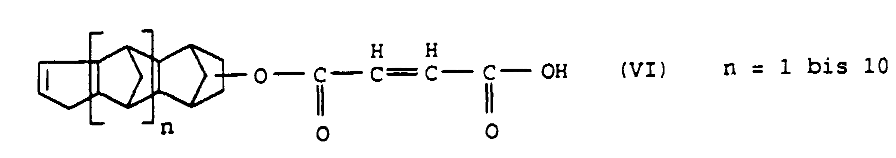 eingeführt werden.

Die erfindungsgemäß zu verwendenden Polyester können unter Mitverwendung von Alkoholen und Polyolen, die ethoxyliert oder propoxyliert sind, unter Mitverwendung von ein- oder mehrwertigen Alkoholen vom Typ der Polyesterpolyole, wie z.B. Polycaprolacton, oder unter Mitverwendung von ein- oder mehrwertigen Alkoholen vom Typ der Polyetherpolyole, wie Polyethylenoxyd, Polypropylenoxyd und/oder Polytetrahydrofuran, aufgebaut worden sein.

Außerdem können beim Aufbau der Polyesterharze ethylenisch ungesättigte Bausteine mitverwendet werden, insbesondere Maleinsäure und Fumarsäure.

Eine weitere vorteilhafte Ausgestaltung der erfindungsgemäßen Verwendung besteht darin, daß die Bindemittel chemisch gebundene Photoinitiatoren enthalten, die Xanthon-, Thioxanthon- und/oder Phenonstrukturen aufweisen, vorzugsweise solche, die als chemisch gebundenen Photoinitiator Hydroxybenzophenon oder Benzophenontetracarbonsäure in die Polyester einkondensiert enthalten.

Die Überzüge können durch Einbrennen bei Temperaturen zwischen 80 und 300°C gehärtet werden oder mit Peroxyden mit oder ohne reaktionsbeschleunigende Coinitiatoren, wie Schwermetallsalzen und/oder C-C-labilen Verbindungen, bei Raumtemperatur oder erhöhter Temperatur gehärtet werden, gegebenenfalls bis zu einem teilgehärteten B-Zustand, um später voll ausgehärtet werden zu können.

Vorteilhaft ist auch, daß die Bindemittel mit aktinischer Strahlung, bevorzugt UV-Strahlung gehärtet werden können, wobei die erforderlichen Photoinitiatoren entweder chemisch gebunden im Bindemittel enthalten sind oder dem Bindemittel zugesetzt wurden oder sowohl chemisch gebundene als auch zugesetzte Photoinitiatoren verwendet werden können.

Ebenso kann die Härtung mit aktinischer Strahlung mit einer Härtung mit Peroxyden oder C-C-labilen Stoffen oder mit einer rein thermischen Härtung kombiniert werden.

Eine besonders vorteilhafte Verwendung besteht auch darin, die Veresterungsprodukte der Formeln (V) und (VI) mit monofunktionellen Alkoholen und/oder polyfunktionellen Alkoholen und/oder deren Alkoxylierungsprodukten und/oder Polyetherpolyolen und/oder Polyesterpolyolen wie Polyethylenoxyd, Polypropylenoxyd, Polytetrahydrofuran und/oder Polycaprolacton einzusetzen.

Vorteilhaft ist auch, wenn die erfindungsgemäß verwendeten Bindemittel bei Raumtemperatur flüssig sind oder Erweichungsbereiche nach DIN 53180 von unter 130°C, bevorzugt unter 90°C, besonders bevorzugt unter 40°C aufweisen, bei einer Viskosität von unter 100.000 mPas bei 100°C, bevorzugt unter 30.000 mPas bei 75°C, besonders bevorzugt unter 5.000 mPas bei 50°C und dabei mindestens 24 Stunden viskositätsstabil sind und bei einer Temperatur, bei der sie eine Viskosität von maximal 10.000 mPas, bevorzugt maximal 2.000 mPas, aufweisen.

Eine weitere Ausgestaltung der erfindungsgemäßen Verwendung besteht darin, daß die Bindemittel Veresterungsprodukte der Stoffe der Formeln (V) und (VI) mit monofunktionellen imidgruppenhaltigen Alkoholen oder Säuren gemäß DE-A-15 70 273 und/oder polyfunktionellen imidgruppenhaltigen Alkoholen oder Säuren und/oder imidgruppenhaltige Hydroxysäuren gemäß DE-A-17 20 323 enthalten können.

Die Bindemittel können zur Erniedrigung der Viskosität bei der Applikation erwärmt oder, im Falle von Feststoffen, aufgeschmolzen werden.

Außerdem können die Bindemittel, gegebenenfalls in untergeordneten Mengen, zusätzlich bekannte ungesättigte Reaktivverdünner enthalten.

Die erfindungsgemäß verwendeten Bindemittel eignen sich vorteilhaft zur Herstellung von pigmentierten, unpigmentierten, gefärbten oder ungefärbten Lacken und Beschichtungen auf Metallen und Nichtmetallen unter Mitverwendung der allgemein bekannten Hilfsstoffe wie Haftvermittler, Katalysatoren, Glanz- und/oder Verlaufsverbesserer.

Die Beschichtungen sind lufttrocknend, thermisch und/oder mit Strahlen härtbar und zum Aufbau hochwertiger Beschichtungen geeignet. Die Aushärtung erfolgt in allen Fällen emissionsfrei.

Geeignete Bindemittel nach der vorliegenden Erfindung sind also spezielle gesättigte und ungesättigte Polyesterharze mit Struktureinheiten des Dihydrodicyclopentadiens, die ohne Mitverwendung von vinylisch ungesättigten Monomeren sowohl unter energiereicher Strahlung, bevorzugt UV-Licht, als auch radikalisch bei Raumtemperatur, mit bekannten Kombinationen von Peroxyden und Co-Initiatoren, wie Schwermetallsalzen, sowie thermisch, mit radikalliefernden Startern, wie Peroxyden, Azostartern oder C-C-labilen Verbindungen und auch rein thermisch härtbar sind. Auch eine beliebige Kombination der genannten Methoden kann zur Härtung verwendet werden. So können Beschichtungen zunächst mit UV-Licht an der Oberfläche gehärtet und dann, mit Stoffen, die thermische Radikale bereitstellen, unter Erwärmung ausgehärtet werden. Weiter können sie mit einer der genannten Methoden teilweise gehärtet und dann später auch mit der gleichen oder einer anderen Methode ausgehärtet werden. Sie können auch vorteilhaft mit einer der genannten Methoden teilgehärtet werden, z.B. bis zur Stapelbarkeit, und die Endgebrauchseigenschaften dann durch Nachhärtung mit der gleichen oder einer anderen Methode erreicht werden.

Aus der Möglichkeit der lösemittelfreien Applikation und der emissionsfreien Vernetzung werden so Bindemittelsysteme zur Verfügung gestellt, die sowohl bei der Applikation als auch bei der Härtung außergewöhnlich emissionsarm sind. Ein weiterer Vorteil der erfindungsgemäß verwendeten Bindemittel ist die Möglichkeit, sie unter energiereicher Strahlung, bevorzugt UV-Licht, sowie auch radikalisch bei Raumtemperatur, mit bekannten Kombinationen von Peroxyden und Co-Initiatoren, wie z.B. Schwermetallsalzen, sowie durch Wärme mit thermisch radikalliefernden Startern wie Peroxyden, Azostartern oder C-C-labilen Verbindungen, sowie auch rein thermisch durch Einbrennen zu härten. Weiter sind die genannten Methoden zur Härtung auch in beliebigen Kombinationen verwendbar. Bevorzugt ist die kombinierte Härtung mit thermisch erzeugten Radikalen und durch UV-Licht erzeugten Radikalen. Auch die Härtung zu einem B-Zustand, d.h. einem teilgehärteten Zustand, bei dem die Härtung unterbrochen ist und später wieder gestartet werden kann, ist möglich. Der besondere Vorteil der erfindungsgemäßen Verwendung besteht darin, daß die Beschichtungen ohne Lösemittel oder flüchtige Reaktivverdünner appliziert werden, wobei die Stoffe entweder bei Raumtemperatur so flüssig sind, daß sie verarbeitet werden können oder durch Erwärmen verflüssigt werden, und in beiden Fällen, gegebenenfalls auch in Anwesenheit von Härtungskatalysatoren, eine gute Stabilität aufweisen, wodurch eine weitgehend emissionsfreie Verarbeitung und Vernetzung ermöglicht wird.

Sehr leicht zugänglich sind die Addukte von Maleinsäureanhydrid und Wasser an DCPD der Formeln (V) und (VI), die bei der erfindungsgemäßen Mitverwendung ungesättigter Polyester zum Aufbau der Bindemittel mit eingesetzt werden können.

Dihydrodicyclopentadienol der Formel (VII) ist kommerziell verfügbar und kann beim Aufbau der Polyester mitverwendet werden, wodurch ebenfalls die Strukturen laut Formeln (I) und (II) eingeführt und gesättigte Bindemittel mit erfindungsgemäßen Struktureinheiten erhalten werden.

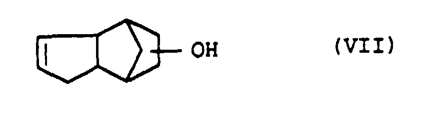

Der Aufbau der erfindungsgemäßen Bindemittel erfolgt nach dem bekannten Stand der Technik zur Herstellung von Polyestern, in der Regel durch Polykondensation von mehrfach funktionellen Hydroxylverbindungen mit mehrfach funktionellen Säuren bzw. deren Anhydriden bei höheren Temperaturen. Weiter ist es oft vorteilhaft, von den Estern solcher Stoffe auszugehen und die Polyester durch Umesterung bei höheren Temperaturen zu erzeugen, weil solche Umesterungen in einigen Fällen leichter und schneller ablaufen als die direkte Veresterung. Weiter können durch (Mit)-Verwendung von mehrfach funktionellen Aminen auch Bindemittel mit Amidstrukturen erhalten werden. Auch die Mitverwendung monofunktioneller Einsatzstoffe ist möglich, z.B. um das Molekulargewicht zu regulieren. Die im folgenden aufgeführten Einsatzstoffe sollen die Erfindung nicht auf diese einschränken, sondern lediglich als Beispiel zur Verdeutlichung dienen.

Geeignete Einsatzstoffe sind Di-, Tri- und Tetracarbonsäuren, wie Adipinsäure, Korksäure, Phthalsäureisomere, Tetrahydrophthalsäure, Endomethylentetrahydrophthalsäure, Hexahydrophthalsäure, Fumarsäure, Maleinsäure, Itaconsäure, Citraconsäure, Trimellithsäure, Pyromellithsäure, Diole, wie Ethylenglykol, Polyethylenglykole, Propylenglykol, Polypropylenglykole, Butandiolisomere, Hexandiol, Neopentylglykol, Triole, wie Trimethylolpropan, und Glyzerin, sowie Pentaerythrit, Bisphenol A, hydriertes Bisphenol A, OH-- polyfunktionelle Polymere, wie hydroxylgruppenmodifizierte Polybutadiene oder hydroxylgruppentragende Polyurethanpräpolymere und Epoxydharze, polyfunktionelle Naturstoffe oder deren Folgeprodukte wie Leinölfettsäure, Dimer- und Polymerleinölfettsäure, Rizinusöl und/oder Rizinusölfettsäure. Von Bedeutung sind auch alkoxylierte OH-funktionelle Stoffe, z.B. die Ethoxylierungs- und Propoxylierungsprodukte der oben genannten Polyole.

Auch die Einführung von Amid- und Imidstrukturen ist gemäß DE-A-15 70 273 und DE-A-17 20 323 bekannter Stand der Technik. Solche Polyesteramide oder Polyesterimide können besondere Anforderungen z.B. bezüglich der Wärmebeständigkeit, häufig besser erfüllen als reine Polyesterbindemittel.

Die Einführung der Strukturen der Formeln (I) und (II) kann bevorzugt über Mitverwendung von Ester nach den Formeln (V) und (VI) bei der Polykondensation erfolgen.

Oligo-DCPD-Gemische erhält man auf bekannte Weise durch Polycycloaddition von Cyclopentadien unter Druck bei Temperaturen zwischen 170 und 300°C. Diese können destillativ aufgearbeitet werden, bevorzugt werden sie aber direkt mit z.B. Maleinsäureanhydrid und Wasser zu Stoffen der Formeln (V) und (VI) umgesetzt.

Weiter ist es möglich, Bindemittel mit einem Überschuß von Säure herzustellen und an den freien Carboxylgruppen dann mit DCPD umzusetzen. Für einen hohen Umsatz ist dabei die Verwendung von Katalysatoren z.B. Bortrifluoridetherat notwendig. Bei höheren Temperaturen und Druck werden dabei auch Oligo-DCPD-Strukturen gebildet. Enthalten die Polyester bei dieser Umsetzung Doppelbindungen in der Polymerkette, z.B. als Maleinsäure- oder Fumarsäureester, so werden durch Pfropfung mit Cyclopentadien Endomethylentetrahydrophthalsäurestrukturen der Formel (VIII) erzeugt.

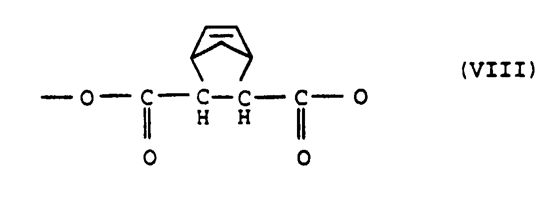

Der Aufbau der Bindemittel im Rahmen der vorliegenden Erfindung, mit speziellen Anforderungen z.B. an Härte, Elastizität, Viskosität, Erweichungspunkt erfolgt nach den dem Fachmann bekannten Regeln. So ist es z.B. dem Fachmann bekannt, die Elastizität ausgehärteter Polyesterharze durch die Kettenlänge der Polyole oder Polycarbonsäuren zu variieren, z.B. sind Polyesterharze, die mit Hexandiol oder Adipinsäure aufgebaut sind, flexibler als solche auf Basis Phthalsäure und Ethylenglykol. Weiter ist die Steuerung der Eigenschaften über die Mitverwendung von polyfunktionellen Stoffen, die Verzweigungen in den Polyestermolekülen erzeugen, wie Trimellithsäure oder Trimethylolpropan, dem Fachmann bekannt.

Da die Gruppen der Formeln (I) und (II) im wesentlichen die Reaktivität bestimmen und in der Regel terminale Gruppen sind, wird die Reaktivität beim Aufbau hochmolekularer Polyester immer geringer. Eine Erhöhung der Reaktivität durch Einbau weiterer Gruppen der Formeln (I) und (II) ist möglich, z.B. durch Mitverwendung polyfunktioneller OH-Verbindungen und Veresterung mit Stoffen der Formeln (V) und (VI), führt aber häufig zu Produkten mit ungeeignet hoher Viskosität. Ein besonderer Aspekt der vorliegenden Erfindung ist daher die Mitverwendung von "DCPD-polyfunktionellen Verbindungen". Diese Stoffe tragen mehrfach die reaktiven Gruppen der Formeln (I) und/oder (II) oder enthalten diese Gruppen in hoher molarer Konzentration, z.B. im Falle von Monoestern niedriger Alkohole oder Diole. Sie sind somit hochreaktive Vernetzer, die in vielen Fällen allein zur Beschichtung verwendet werden können, die aber bevorzugt anteilig in üblichen linearen oder niedrigverzweigten Polyesterharzen enthalten sind. Weiter sind viele dieser Stoffe niedrigviskose Flüssigkeiten mit sehr hohem Siedepunkt, mit denen auch die Viskositätsbereiche eingestellt werden können, ohne daß dadurch bei Verarbeitung und Härtung höhere Emissionen generiert werden.

So ist es möglich, Polyester mit relativ hoher Schmelzviskosität und hohem Erweichungspunkt für die vorliegende Erfindung zu verwenden und die gewünschte niedrige Verarbeitungsviskosität durch Zugabe dieser Stoffe einzustellen. Diese Stoffe stellen also speziell auf die erfindungsgemäßen Systeme abgestimmte Reaktivverdünner dar, ohne die Nachteile der bekannten acrylisch oder vinylisch ungesättigten monomeren Reaktivverdünner wie Styrol oder monomere Acrylate.

Derartige Stoffe leiten sich ab von monofunktionellen Alkoholen oder polyfunktionellen Hydroxyverbindungen mit mehr als zwei Hydroxylgruppen pro Molekül, die ganz oder zum Teil mit Monocarbonsäuren der Formeln (V) und (VI) verestert sind, aber auch teilweise mit anderen Stoffen verestert oder verethert sein können. Als Stoffe dieser Art seien beispielhaft genannt die Ester von Stoffen der Formeln (V) und (VI) mit Mono- und Polyalkoholen wie Butanol, Hexanol, Butandiol, Hexandiol, Polyethylenglykolmonoalkylether, Polypropylenglykolmonoalkylether, Trimethylolpropan, Pentaerythrit oder noch höher funktioneller Hydroxylverbindungen. Weiter sind hierfür von Bedeutung hydroxylgruppenhaltige natürliche Öle wie z.B. Rizinusöl.

Von besonderer Bedeutung sind auch die Ester der Ethoxylierungs- und Propoxylierungsprodukte solcher höher funktionellen Hydroxylverbindungen sowie Polyester- und Polyetherpolyole vom Typ Polyethylenoxyd, Polypropylenoxyd, Polytetrahydrofuran und Polycaprolacton; diese Ester sind überwiegend niedrigviskose Flüssigkeiten. Von Bedeutung sind außerdem die Ester von Polyurethanpolyolen.

Durch die Art der Alkoxylierungsmittel und den Grad der Alkoxylierung lassen sich auch Eigenschaften der gehärteten Filme, wie Härte, Abriebfestigkeit, Elastizität, Haftung, Gleitfähigkeit u.a. steuern. Solche Polyole können auch nur zum Teil mit Stoffen der Formeln (V) und (VI) verestert sein, wobei die restlichen Hydroxylgruppen entweder frei bleiben oder mit anderen Stoffen verestert oder verethert sein oder mit anderen, mit Hydroxylgruppen reaktiven Stoffen umgesetzt sein können. Hierfür kommen z.B. Isocyanate oder Epoxyde in Frage. Ein wichtiger Vorteil der vorliegenden Erfindung ist die Einstellung der temperaturabhängigen Viskosität der Beschichtungsmittel bei der Verarbeitung durch die Verwendung dieser Stoffe. Dadurch und durch die spezielle Reaktivität der DCPD-Strukturen der Polyester wird es möglich, reaktionsfertig katalysierte Bindemittel bereitzustellen, die ohne Verwendung der bekannten monomeren Reaktivverdünner wie Styrol, Vinyltoluol, α-Methylstyrol, Allylester und (Meth-)Acrylester entweder schon bei Raumtemperatur flüssig verarbeitet werden können, oder durch Erwärmen auf die der jeweiligen Verwendung angepaßte Viskosität einstellbar sind.

Stoffmischungen, die dieser Anforderung genügen, sind bei Raumtemperatur flüssig oder feste Harze mit Erweichungsbereichen nach DIN 53180 von unter 130°C, bevorzugt unter 90°C, besonders bevorzugt unter 40°C, bei einer Viskosität von unter 100.000 mPas bei 100°C, bevorzugt unter 30.000 mPas bei 75°C, besonders bevorzugt unter 5.000 mPas bei 50°C und unter 10.000 mPas bei 25°C, dabei sind sie mindestens 24 Stunden viskositätsstabil, bei einer Temperatur, bei der sie eine Viskosität von maximal 10.000 mPas, bevorzugt maximal 2.000 mPas aufweisen.

Bevorzugt werden diese die Reaktivität und Viskosität regelnden Stoffe getrennt hergestellt und dann mit den erfindungsgemäßen Polyestern gemischt und gegebenenfalls mit Katalysatoren, farbgebenden Stoffen, Pigmenten, Füllstoffen und anderen Hilfsstoffen zu gebrauchsfertigen, lagerstabilen Beschichtungsmitteln konfektioniert. Es ist aber in vielen Fällen auch möglich, durch entsprechende Einstellung der stöchiometrischen Verhältnisse solche, die Reaktivität und Viskosität regelnde Stoffe bei der Polyesterherstellung in situ herzustellen.

Weiter ist es technisch möglich, in untergeordneten Mengen die bekannten ethylenisch ungesättigten Reaktivverdünner, z.B. Styrol, mit einzusetzen. So können z.B. styrolarme Beschichtungsmittel unter Erhalt der sonstigen guten Eigenschaften der erfindungsgemäßen Stoffe formuliert werden, um z.B. gesetzliche Grenzwerte der Styrolkonzentrationen oder -emissionen zu unterschreiten.

Die erfindungsgemäß zu verwendenden Bindemittel sind bei Raumtemperatur oder höheren Temperaturen lufttrocknend. Sie können durch Einbrennen gehärtet werden. Diese thermische Härtung kann durch Zusatz von Stoffen, die beim Erhitzen Radikale bilden, beschleunigt oder bei niedrigeren Temperaturen durchgeführt werden. Bekannte Radikalbildner sind z.B. Peroxyde, Azoverbindungen, Azide und C-C-labile Stoffe. Eine erhebliche Beschleunigung der Härtung bzw. Absenkung der Härtungstemperatur ist mit Metallcoinitiatoren wie z.B. Kobalt-, Mangan-, Eisen-, Nicke-, Titan- oder Bleiverbindungen möglich.

Weiter weisen die erfindungsgemäßen Bindemittel in Gegenwart von UV--Initiatoren vom Typ der α-Spalter (Norrish-Typl) oder der H-Donor/Akzeptor-Systeme (Norrish-Typ2) eine hohe UV-Empfindlichkeit auf. Eine bevorzugte Art der Einführung von H-Akzeptor-Gruppen ist die Mitverwendung von einkondensierbaren Phenonverbindungen, wie z.B. Hydroxy- oder Bishydroxy-Benzophenon oder Benzophenontetracarbonsäure bei der Polykondensation der Polyesterharze.

Die erfindungsgemäß zu verwendenden Bindemittel finden Einsatz bei der Herstellung von pigmentierten oder unpigmentierten Lacken und anderen Beschichtungen. Dabei können die in der Lacktechnik üblichen Techniken und Stoffe verwendet werden. Bekannt ist die Verwendung von Farbstoffen, Farbpigmenten, mineralischen und nichtmineralischen Füllstoffen, Netz- und Dispergierhilfsmitteln, Haftvermittlern, Verlaufshilfsmittel u.a.m.

Die aus den erfindungsgemäßen Bindemitteln hergestellten Beschichtungsstoffe können auf die unterschiedlichsten flächigen als auch strukturierten Substrate appliziert werden, wie vorbehandelte und nicht vorbehandelte Bleche, Profile oder Formkörper aus Metallen, sowie auf Substrate aus Glas, Keramik, Holz, Holzspanerzeugnissen, Kunststoffen, Fasersubstraten aus natürlichen organischen und anorganischen Fasern, aus synthetischen organischen und anorganischen Fasern u.v.m. Dabei kommt der besondere technische Fortschritt der Härtbarkeit nach verschiedenen Methoden zum Tragen, der es erlaubt, die dem jeweiligen Substrat und Fertigungsprozeß optimal angepaßte Härtetechnik zu verwenden.

Die in den folgenden Beispielen genannten Teile und Prozente sind, soweit nicht anders angegeben, Gewichtsteile bzw. Gewichtsprozente.

### Beispiel 1

In einem Rührkolben mit Heizung und Rückflußkühler wurden
1.586,52 g Dicyclopentadien (12,0 Mol) und
1.176,72 g Maleinsäureanhydrid (12,0 Mol)
eingewogen.

Die Mischung wurde unter einem leichten Stickstoffstrom auf 125°C erhitzt und dann über einen Tropftrichter innerhalb einer Stunde 226,00 g Wasser (12,0 Mol + 10 g) zugegeben. Bei 125°C wurde eine Stunde nachreagieren lassen. Es bildete sich eine Monocarbonsäure der Formel (V).

Der Kolbeninhalt wurde auf 70°C abgekühlt. Dann wurden
715,00 g 1,6-Hexandiol (6,05 Mol)
4,00 g Dibutylzinndilaurat (DBTL) und
0,50 g Hydrochinon
zugegeben. Unter einem leichten Stickstoffstrom wurde rasch auf 120°C aufgeheizt und dann innerhalb von 6 Stunden die Temperatur allmählich auf 190°C erhöht und das entstehende Kondensationswasser abdestilliert.

Es wurde ein weiches Harz erhalten mit einer Säurezahl von 24 und Viskositäten von 4.650 mPas bei 50°C, 1.460 mPas bei 75°C und 260 mPas bei 100°C.

### Beispiel 2

In einem Rührkolben mit Heizung und Rückflußkühler wurden
661,10 g Dicyclopentadien (5,0 Mol) und
490,30 g Maleinsäureanhydrid (5,0 Mol)
eingewogen.

Die Mischung wurde unter einem leichten Stickstoffstrom auf 125°C erhitzt und dann über einen Tropftrichter innerhalb einer Stunde 95,00 g Wasser ((5,0 Mol + 5 g) zugegeben. Bei 125°C wurde eine Stunde nachreagieren lassen. Es bildete sich eine Monocarbonsäure der Formel (V).

Der Kolbeninhalt wurde auf 70°C abgekühlt, Dann wurden
245,15 g Maleinsäureanhydrid (2,5 Mol)
234,20 g Neopentylglykol (2,25 Mol)
413,20 g 1,6-Hexandiol (3,5 Mol)
4,00 g Dibutylzinndilaurat (DBTL) und
0,50 g Hydrochinon
zugegeben. Unter einem leichten Stickstoffstrom wurde dann rasch auf 120°C aufgeheizt. Innerhalb von 3 Stunden wurde die Temperatur allmählich auf 190°C erhöht und das entstehende Kondensationswasser abdestilliert. Nach weiteren 2 Stunden wurde die Kondensation abgebrochen um ein relativ niedrigviskoses Harz mit freien Carboxyl- und Hydroxylgruppen zu erhalten. Es resultierte ein flüssiges Harz mit einer Säurezahl von 53 und einer Viskosität von 6.345 mPas bei 25°C.

### Beispiel 3

In einem Rührkolben mit Heizung und Rückflußkühler wurden
661,10 g Dicyclopentadien (5,0 Mol) und
490,30 g Maleinsäureanhydrid (5,0 Mol)
eingewogen.

Die Mischung wurde unter einem leichten Stickstoffstrom auf 125°C erhitzt und dann über einen Tropftrichter innerhalb einer Stunde 95,00 g Wasser (5,0 Mol + 5 g) zugegeben. Bei 125°C wurde anschließend eine Stunde nachreagieren lassen. Es bildete sich eine Monocarbonsäure der Formel (V).

Der Kolbeninhalt wurde auf 70°C abgekühlt. Dann wurden
532,20 g TP 30 (6 Mol-Äquivalent-OH)
(TP 30 ist ein Ethoxylierungsprodukt aus einem Mol Trimethylolpropan und ca. 3 Mol Ethylenoxyd mit einem OH-Äquivalent von 88,7)
3,00 g Dibutylzinndilaurat (DBTL) und
0,30g Hydrochinon
zugegeben.

Unter einem leichten Stickstoffstrom wurde durch langsames Aufheizen auf 190°C bis zu einer Säurezahl von 8 verestert. Es wurde ein bei Raumtemperatur hochviskoses Harz erhalten. Die temperaturabhängigen Viskositäten betrugen bei 50°C 1.650 mPas und bei 100°C 380 mPas.

### Beispiel 4

In einem Rührkolben mit Heizung und Rückflußkühler wurden
1.322,10 g Dicyclopentadien (10,0 Mol) und
980,60 g Maleinsäureanhydrid (10,0 Mol)
eingewogen. Unter leichtem Stickstoffstrom wurde auf 125°C erhitzt und dann über einen Tropftrichter innerhalb einer Stunde 190,00 g Wasser (10,0 Mol + 10 g) zugegeben. Bei 125°C wurde eine Stunde nachreagieren lassen. Es bildete sich eine Monocarbonsäure der Formel (V).

Der Kolbeninhalt wurde auf 70°C abgekühlt. Dann wurden
963,60 g n-Butanol (13 Mol)
0,30 g Hydrochinon und
8,00 g p-Toluolsulfonsäure
zugegeben.

Der Rückflußkühler wurde durch einen Wasserauskreiser ersetzt. Unter Stickstoff wurde der Kolbeninhalt zum Sieden gebracht und Wasser ausgekreist, dabei stieg die Siedetemperatur stetig an. Ab 170°C Innentemperatur im Kolben wurde der Wasserauskreiser auf Destillation umgestellt und die Temperatur innerhalb von 2 Stunden auf 190°C gesteigert. Dabei destilliert das überschüssige Butanol ab. Nach dem Abkühlen wurde eine niedrigviskose Flüssigkeit erhalten mit einer Säurezahl von 18,1 und einer Viskosität von 252 mPas bei 25°C.

### Lacktechnische Prüfung erfindungsgemäßer Überzüge

### a) Coilcoat-Lack

275 Teile Harz nach Beispiel 1
100 Teile Harz nach Beispiel 2
125 Teile Verbindung nach Beispiel 4
145 Teile Rutilpigment Kronos® 2300 und
5 Teile Farbruß
wurden auf 40°C erwärmt, unter einem Labordissolver homogenisiert und dann auf einer Lackdreiwalze dispergiert. Es wurde ein Lack mit einer Viskosität von 3.250 mPas bei 25°C erhalten. Der Lack wurde mit einer Rakel von 60 µ Spalthöhe auf entfettete Stahlbleche von 0,5 mm Dicke aufgerakelt und 5 Minuten bei 180°C im Umluftofen eingebrannt, wobei ein Gewichtsverlust von 2,4% auftrat. Es resultierte eine hellgraue, harte, kratzfeste Lackschicht, die biegefest ist und nach zehnmaligem Reiben mit einem acetonfeuchten Wattebausch keinen Angriff zeigt.

### b) Platinenbeschichtung

275 Teile Harz nach Beispiel 2
100 Teile Harz nach Beispiel 3
125 Teil Verbindung nach Beispiel 4
15 Teile tert.-Butylperbenzoat und
15 Teile Benzophenon
wurden unter leichtem Erwärmen gemischt und mit einem Pinsel auf die Lötkontaktseite einer mit elektrischen Elementen bestückten Leiterplatte aufgetragen. Die Platte wurde bei 80°C für 10 Minuten im Umluftofen erwärmt, dabei gelierte das Harz, blieb aber an der Oberfläche noch klebrig. Die noch warme Platte wurde sofort mit einer Energie von 45 mW/cm² mit einer breitbandigen UV-Lampe 60 Sekunden lang bestrahlt. Dabei härtete das Harz zu einem klaren, kratzfesten Überzug aus, der unter einem acetonfeuchten Wattebausch nach 15 Minuten keine Quellung zeigte. Die Überdeckung der Lötstellen mit Harz ist sehr gut. Die Verluste aus Emissionen bei der Härtung betragen 1,79 Gew.-%.

## Patentansprüche

1. Verwendung von monomerenfreien, gesättigten und ungesättigten Polyesterharzen oder Mischungen aus gesättigten und ungesättigten Polyesterharzen, die Struktureinheiten der allgemeinen Formeln (I) und/oder (II) aufweisen, 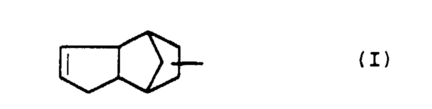 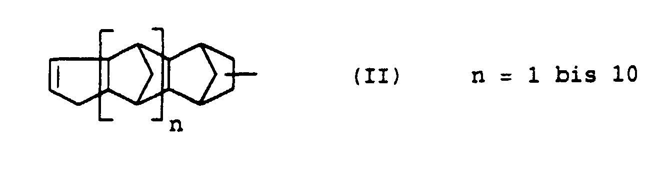 als emissionsarme Bindemittel für Überzüge.

2. Verwendung nach Anspruch 1, dadurch gekennzeichnet, daß die Struktureinheiten der Formeln (I) und/oder (II) in Form von Estern des Dihydrodicyclopentadienols mit monomeren oder polymeren Carbonsäuren enthaltend Gruppierungen der Formel (III) und/oder in Form von Estern des Oligodihydrodicyclopentadienols mit monomeren oder polymeren Carbonsäuren enthaltend Gruppierungen der Formel (IV) 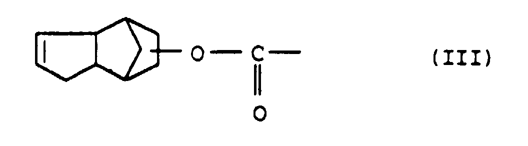 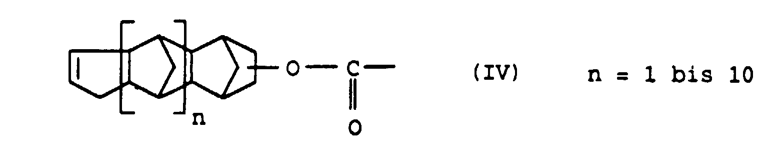 eingebaut sind.

3. Verwendung nach Anspruch 1 oder 2, dadurch gekennzeichnet, daß die Bindemittel monomerenfreie ungesättigte Polyesterharze sind, die Struktureinheiten der allgemeinen Formeln (I) und/oder (II) aufweisen.

4. Verwendung nach Anspruch 1, dadurch gekennzeichnet, daß zusätzlich ungesättigte Polyester mit Struktureinheiten der Formeln (I) und/oder (II) mitverwendet werden, wenn gesättigte Polyesterharze eingesetzt werden.

5. Verwendung nach einem der Ansprüche 1 bis 4, dadurch gekennzeichnet, daß die Struktureinheiten der Formeln (I) und/oder (II) durch Mitverwendung von Verbindungen der Formeln (V) und/oder (VI) 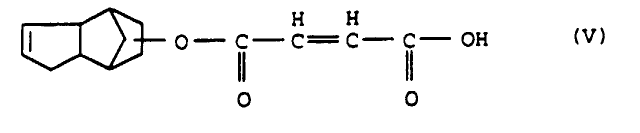 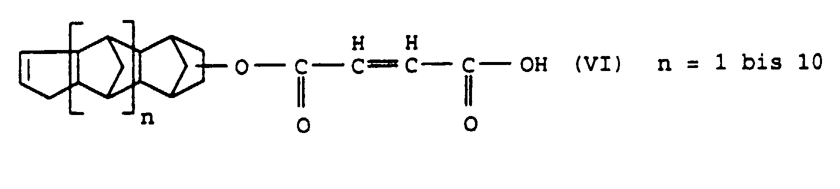 eingeführt wurden.

6. Verwendung nach einem der vorhergehenden Ansprüche, dadurch gekennzeichnet, daß die Polyester unter Mitverwendung von Alkoholen und Polyolen, die ethoxyliert oder propoxyliert sind, von ein- oder mehrwertigen Alkoholen vom Typ der Polyesterpolyole oder von ein- oder mehrwertigen Alkoholen vom Typ der Polyetherpolyole, Polycaprolacton oder Polytetrahydrofuran aufgebaut wurden.

7. Verwendung nach einem der Ansprüche 1 bis 6, dadurch gekennzeichnet, daß beim Aufbau der Polyesterharze ethylenisch ungesättigte Bausteine mitverwendet wurden.

8. Verwendung nach einem der Ansprüche 1 bis 7, dadurch gekennzeichnet, daß sie chemisch gebundene Photoinitiatoren enthalten, die Xanthon-, Thioxanthon- und/oder Phenonstrukturen aufweisen, oder als chemisch gebundener Photoinitiator Hydroxybenzophenon oder Benzophenontetracarbonsäure in die Polyester einkondensiert sind.

9. Verwendung nach einem der Ansprüche 1 bis 8, dadurch gekennzeichnet, daß die Überzüge durch Einbrennen bei Temperaturen zwischen 80 und 300°C gehärtet werden.

10. Verwendung nach einem der Ansprüche 1 bis 9, dadurch gekennzeichnet, daß die Bindemittel mit Peroxyden mit oder ohne reaktionsbeschleunigende Coinitiatoren bei Raumtemperatur oder erhöhter Temperatur gehärtet werden, gegebenenfalls bis zu einem teilgehärteten B-Zustand, um später voll ausgehärtet werden zu können, oder die Bindemittel mit aktinischer Strahlung gehärtet werden, wobei die erforderlichen Photoinitiatoren entweder chemisch gebunden im Bindemittel enthalten sind oder dem Bindemittel zugesetzt wurden oder sowohl chemisch gebundene als auch zugesetzte Photoinitiatoren verwendet werden und gegebenenfalls eine Härtung mit aktinischer Strahlung mit einer Härtung mit Peroxyden oder C-C-labilen Stoffen oder einer rein thermischen Härtung kombiniert wird.

11. Verwendung nach einem der Ansprüche 1 bis 10, dadurch gekennzeichnet, daß die Bindemittel Veresterungsprodukte der Formeln (V) und (VI) mit monofunktionellen Alkoholen und/oder polyfunktionellen Alkoholen und/oder deren Alkoxylierungsprodukten und/oder Polyetherpolyolen und/oder Polyesterpolyolen und/oder der Stoffe der Formeln (V) und (VI) mit monofunktionellen imidgruppenhaltigen Alkoholen oder Säuren und/oder polyfunktionellen imidgruppenhaltigen Alkoholen oder Säuren und/oder imidgruppenhaltigen Hydroxysäuren enthalten.

12. Verwendung nach einem der Ansprüche 1 bis 11, dadurch gekennzeichnet, daß die Bindemittel bei Raumtemperatur flüssig sind oder Erweichungsbereiche nach DIN 53180 von unter 130°C aufweisen, bei einer Viskosität von unter 100.000 mPas bei 100°C und dabei mindestens 24Stunden viskositätsstabil sind, bei einer Temperatur bei der sie eine Viskosität von maximal 10.000 mPas aufweisen, oder die Bindemittel zur Erniedrigung der Viskosität bei der Applikation erwärmt werden, oder im Falle von Feststoffen aufgeschmolzen werden, oder die Bindemittel, gegebenenfalls in untergeordneten Mengen, zusätzlich bekannte ungesättigte Reaktivverdünner enthalten.

13. Verwendungen nach einem der Ansprüche 1 bis 12 als Bindemittel für pigmentierte, unpigmentierte, gefärbte oder ungefärbte Lacke und Beschichtungen auf Metallen und Nichtmetallen unter Mitverwendung allgemein üblicher Hilfsstoffe aus der Gruppe der Haftvermittler, Katalysatoren, Glanz- und/oder Verlaufsverbesserer.

## Claims

1. The use of monomer-free, saturated and unsaturated polyester resins or mixtures of saturated and unsaturated polyester resins comprising structural units of the general formulae (I) and/or (II) 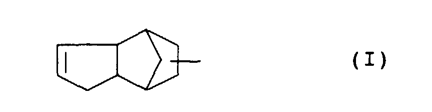 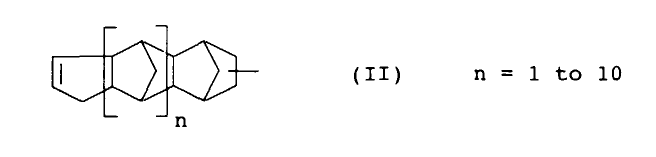 as low-emission binders for coatings.

2. The use as claimed in claim 1, wherein the structural units of the formulae (I) and/or (II) are incorporated in the form of esters of dihydrodicyclopentadienol with monomeric or polymeric carboxylic acids comprising groups of the formula (III) and/or in the form of esters of oligodihydrodicyclopentadienol with monomeric or polymeric carboxylic acids comprising groups of the formula (IV)

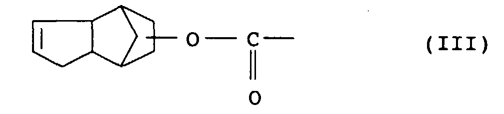

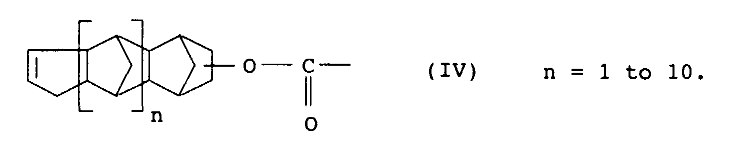

3. The use as claimed in claim 1 or 2, wherein the binders are monomer-free unsaturated polyester resins comprising structural units of the general formulae (I) and/or (II).

4. The use as claimed in claim 1, wherein unsaturated polyesters containing structural units of the formulae (I) and/or (II) are additionally used if saturated polyester resins are employed.

5. The use as claimed in any of claims 1 to 4, wherein the structural units of the formulae (I) and/or (II) have been introduced by using compounds of the formulae (V) and/or (VI)

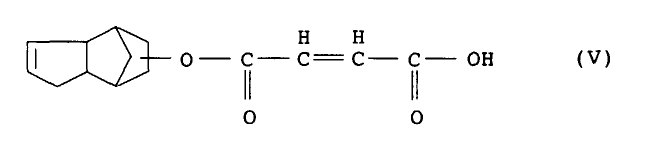

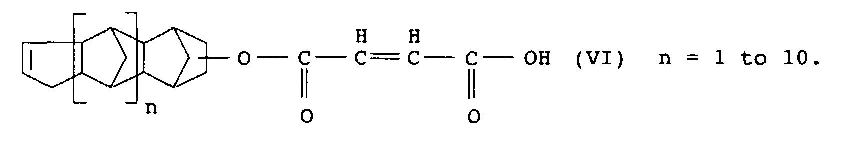

6. The use as claimed in any of the preceding claims, wherein the polyesters have been synthesized using alcohols and polyols which are ethoxylated or propoxylated, using mono- or polyhydric alcohols of the polyesterpolyol type or using mono- or polyhydric alcohols of the polyetherpolyol, polycaprolactone or polytetrahydrofuran type.

7. The use as claimed in any of claims 1 to 6, wherein ethylenically unsaturated units were additionally used in synthesizing the polyester resins.

8. The use as claimed in any of claims 1 to 7, wherein the binders comprise chemically bonded photoinitiators containing xanthone, thioxanthone and/or phenone structures, or hydroxybenzophenone or benzophenonetetracarboxylic acid are incorporated into the polyesters by condensation as chemically bonded photoinitiator.

9. The use as claimed in any of claims 1 to 8, wherein the coatings are cured by stoving at between 80 and 300°C.

10. The use as claimed in any of claims 1 to 9, wherein the binders are cured with peroxides, with or without reaction-accelerating co-initiators, at room temperature or at elevated temperature, if appropriate up to a partially cured B stage, and can then be cured fully at a later point in time, or the binders are cured with actinic radiation, the photoinitiators required either being present in chemically bonded form in the binder or having been added to the binder, or both chemically bonded and added photoinitiators are used and if appropriate curing with actinic radiation is combined with curing with peroxides or C-C-labile substances or purely thermal curing.

11. The use as claimed in any of claims 1 to 10, wherein the binders comprise esterification products of the formulae (V) and (VI) with monofunctional alcohols and/or polyfunctional alcohols and/or the alkoxylation products thereof and/or polyetherpolyols and/or polyesterpolyols and/or of the substances of the formulae (V) and (VI) with monofunctional, imido-containing alcohols or acids and/or polyfunctional, imido-containing alcohols or acids and/or imido-containing hydroxy acids.

12. The use as claimed in any of claims 1 to 11, wherein the binders are liquid at room temperature or have softening ranges according to DIN 53180 of below 130°C, with a viscosity of below 100,000 mPas at 100°C, while being viscosity-stable for at least 24 hours at a temperature at which they have a viscosity of not more than 10,000 mPas, or the binders are heated on application in order to reduce the viscosity or, in the case of solids, are melted, or the binders additionally comprise known, unsaturated reactive diluents, if appropriate in minor amounts.

13. The use as claimed in any of claims 1 to 12 as binders for pigmented, unpigmented, colored or uncolored coating materials and coatings on metals and nonmetals with the additional use of generally customary auxiliaries from the group consisting of adhesion promoters, catalysts, gloss enhancers and/or flow improvers.

## Revendications

1. Utilisation de résines de polyester saturées et insaturées, exemptes de monomères, ou de mélanges de résines de polyester saturées et insaturées, qui présentent des unités de structure répondant aux formules générales (I) et/ou (II): 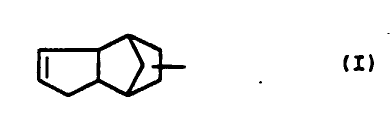 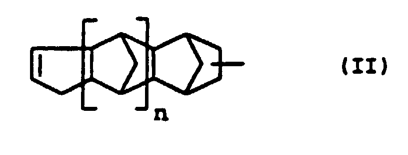 n = 1 à 10
comme liants à faible taux d'émission pour des revêtements.

2. Utilisation suivant la revendication 1, caractérisée en ce que les unités de structure des formules (I) et/ou (II) sont incorporées sous la forme d'esters du dihydrodicyclopentadiénol avec des groupements de la formule (III) contenant des acides carboxyliques monomères ou polymères et/ou sous la forme d'esters de l'oligodihydrodicyclopentadiénol avec des groupements de la formule (IV) contenant des acides carboxyliques monomères ou polymères : 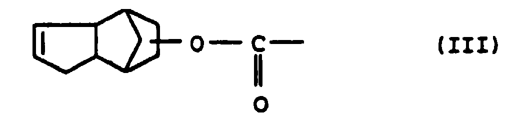 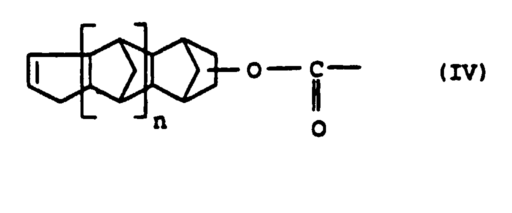 n = 1 à 10

3. Utilisation suivant l'une des revendications 1 et 2, caractérisée en ce que les liants sont des résines de polyester insaturées, exemptes de monomères, qui présentent des unités de structure des formules générales (I) et/ou (II).

4. Utilisation suivant la revendication 1, caractérisée en ce qu'en supplément on utilise conjointement des polyesters insaturés ayant des unités de structure des formules (I) et/ou (II), lorsque des résines de polyester saturées sont mises en oeuvre.

5. Utilisation suivant l'une des revendications 1 à 4, caractérisée en ce que les unités de structure des formules (I) et/ou (II) sont introduites par utilisation conjointe de composés des formules (V) et/ou (VI):

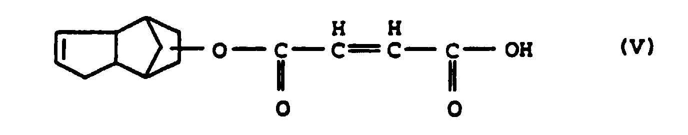

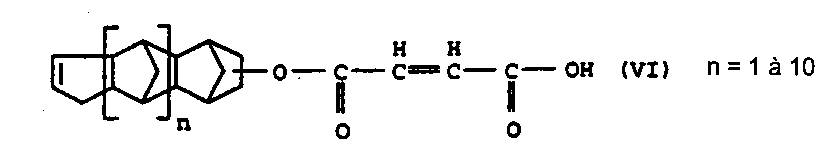

6. Utilisation suivant l'une des revendications précédentes, caractérisée en ce que les polyesters sont édifiés par utilisation conjointe d'alcools et de polyols, qui sont éthoxylés ou propoxylés, de monoalcools ou de polyols du type des polyesterpolyols ou de monoalcools ou de polyols du type des polyétherpolyols, de polycaprolactone ou de polytétrahydrofuranne.

7. Utilisation suivant l'une des revendications 1 à 6, caractérisée en ce que, lors de l'édification des résines de polyester, on utilise conjointement des éléments constitutifs éthyléniquement insaturés.

8. Utilisation suivant l'une des revendications 1 à 7, caractérisée en ce qu'elles contiennent des photoinitiateurs fixés par voie chimique qui présentent des structures de xanthone, de thioxanthone et/ou de phénone, ou en ce que, comme photoinitiateur fixé par voie chimique, de l'hydroxybenzophénone ou de l'acide benzophénonetétracarboxylique est condensé dans le polyester.

9. Utilisation suivant l'une des revendications 1 à 8, caractérisée en ce que les revêtements sont durcis par cuisson à des températures entre 80 et 300°C.

10. Utilisation suivant l'une des revendications 1 à 9, caractérisée en ce que les liants sont durcis à la température ambiante ou à température élevée avec des peroxydes, avec ou sans coinitiateurs accélérant la réaction, éventuellement jusqu'à un état B partiellement durci, pour pouvoir être ultérieurement totalement durcis, ou en ce que les liants sont durcis par un rayonnement actinique, les photoinitiateurs requis étant soit contenus dans le liant par liaison chimique, soit ajoutés au liant ou non seulement des photoinitiateurs chimiquement liés mais aussi ajoutés étant utilisés, et en ce qu'éventuellement un durcissement par un rayonnement actinique est combiné à un durcissement avec des peroxydes ou des substances C-C labiles ou à un durcissement purement thermique.

11. Utilisation suivant l'une des revendications 1 à 10, caractérisée en ce que les liants contiennent des produits d'estérification des formules (V) et (VI) avec des monoalcools et/ou des polyols et/ou leurs produits d'alcoxylation et/ou des polyétherpolyols et/ou des polyesterpolyols et/ou les substances des formules (V) et (VI) avec des acides ou alcools monofonctionnels contenant des imides et/ou des acides ou alcools polyfonctionnels contenant des groupes imide et/ou des hydroxyacides contenant des groupes imide.

12. Utilisation suivant l'une des revendications 1 à 11, caractérisée en ce que les liants sont fluides à la température ambiante ou présentent des gammes de ramollissement selon la norme DIN 53180 inférieures à 130°C, pour une viscosité inférieure à 100.000 mPas à 100°C et sont de viscosité stable pendant au moins 24 heures, à une température à laquelle ils présentent une viscosité d'au maximum 10.000 MPas, ou en ce que les liants sont, pour diminuer la viscosité, chauffés lors de l'application ou, dans le cas de substances solides, fondus, ou en ce que les liants contiennent en supplément, éventuellement en quantités minimes, des diluants réactifs insaturés connus.

13. Utilisation suivant l'une des revendications 1 à 12, comme liants pour des vernis pigmentés, non pigmentés, colorés ou non colorés, et des recouvrements sur des métaux et des non-métaux, avec utilisation conjointe de matières auxiliaires courantes du groupe des agents adhérisants, des catalyseurs, des agents améliorant le brillant et/ou l'étalement.
